# EUROPÄISCHE PATENTANMELDUNG

(11) **EP 1 124 299 A1**
(43) Veröffentlichungstag der Anmeldung: **16.08.2001**
(21) Anmeldenummer: 00102781.2
(22) Anmeldetag: 10.02.2000
(51) Int. Cl.: H02J 1/10, G06F 1/26

(54) **Netzteil für dezentrale Spannungsversorgung eines Busses**

(71) Anmelder: SIEMENS AKTIENGESELLSCHAFT, 80333 München (DE)
(72) Erfinder: Fichtner, Norbert, Dipl.-Ing., 80069 Schierling (DE)

(57) **Zusammenfassung**

Netzteil mit Einrichtung für dezentrale Spannungsversorgung für einen Bus (1), der Information und Energie für Bordnetze von Busankopplern und Busgeräten (2) führt, wobei jeweils zwischen zwei Sendeimpulsen ein Ausgleichsimpuls im Sinne der Erzielung eines in der Summe möglichst konstanten Gleichspannungspotentials generiert wird und wobei an Schnittstellen von Busankopplern Busgeräte für Anwenderfunktionen anschließbar sind und wobei das Netzteil für aktive Strombegrenzung und für Entkopplung, um parallele Anordnung mehrerer Netzteile zu ermöglichen, eingerichtet ist und wobei ein Energiespeicher (C,C1) zur Speicherung von Energie zwischen zwei Sendeimpulsen ausgebildet ist. Es ist vorgesehen, dass die Einrichtung für dezentrale Spannungsversorgung jeweils in einer Spannungsversorgungseinheit (3) angeordnet ist, die für aktive Strombegrenzung eingerichtet ist und dass ein für mehrere Spannungsversorgungseinheiten (3) gemeinsames Übertragungsmodul (4) für die Generierung von Ausgleichsimpulsen eingerichtet ist und dass es mit dem Energiespeicher versehen ist.

## Beschreibung

Die Erfindung bezieht sich auf ein Netzteil mit Einrichtung für dezentrale Spannungsversorgung für einen Bus, der Information und Energie für Bordnetze von Busankopplern und Busgeräten führt, im einzelnen nach Gattungsbegriff von Anspruch 1. Zwischen jeweils zwei Sendeimpulsen wird ein Ausgleichsimpuls im Sinne der Erzielung eines in der Summe möglichst konstanten Gleichspannungspotentials generiert. An Schnittstellen von Busankopplern können Busgeräte für Anwenderfunktionen angeschlossen werden. Um eine dezentrale Spannungsversorgung zu ermöglichen, arbeitet man mit Strombegrenzung, mit Entkopplung, um parallele Anordnung mehrerer Netzteile zu ermöglichen, und mit Energiespeicher zur Speicherung von Energie zwischen zwei Sendeimpulsen.

Ein Bus der geschilderten Art ist insbesondere der Bus der EIBA (European Installation Bus Association). Ein Netzteil mit hier eingangs geschilderten Funktionen ist schon an anderer Stelle vorgeschlagen worden (DE: 198 50 125.0, bekannt nach § 3, Abs.2, PatG).

Üblicherweise arbeitet man mit zentraler Spannungsversorgung, die wirtschaftlich umso aufwendiger wird, je weniger Busankoppler für Teilnehmerstationen angeschlossen werden. Die Busankoppler mit anwenderseitigen Geräten, hier zusammenfassend als Busgeräte bezeichnet, können an der Busleitung beliebig verteilt angeschlossen werden. Über die Busleitung erfolgt üblicherweise zentral sowohl die Spannungsversorgung für die Bordnetze der Busgeräte als auch der Energie für die Datenübertragung. Es ist darauf zu achten, dass die Spannungsversorgung von der Datenübertragung entkoppelt ist. Die Spannungsversorgung hat die Leistung für die Grundversorgung der Busgeräte und für das Senden zur Verfügung zu stellen. Die Begrenzung des Sendestroms aus einer zentralen Spannungsversorgung wird häufig durch eine Induktivität erreicht. Üblicherweise wird die Amplitude des Sendesignals geregelt, wodurch die Spannungsversorgung der Busgeräte vom Übertragungsprotokoll unabhängig wird. Die Spannungsversorgung stellt eine Gleichspannung zur Verfügung, die einen Ausgleichsimpuls generiert, um ein nahezu gleichspannungsfreies Datensignal zu erreichen.

In der Regel wählt man eine zentrale Spannungsversorgung, da die Parallelschaltung von mehreren dezentralen Spannungsversorgern in der Praxis problematisch ist. Unterschiedliche Spannungen einzelner dezentraler Spannungsversorger führen verständlicherweise zu Ausgleichsströmen. Dadurch wäre der Spannungsversorger mit der höchsten Spannung ständig überlastet. Außerdem ist bei ungünstiger Verteilung dezentraler Spannungsversorger auch mit Schwingungen auf den Bus zu rechnen.

Eine derartige Einrichtung für zentrale Spannungsversorgung ist für die maximale Anzahl von Busgeräten auszulegen. Die Kosten, bezogen auf ein einzelnes Busgerät, steigen umso erheblicher, umso weniger Busgeräte im Einzelfall angeschlossen sind.

Der Erfindung liegt die Aufgabe zugrunde, ein Netzteil mit Einrichtung für dezentrale Spannungsversorgung zu entwickeln, das die geschilderten Nachteile vermeidet und besonders wirtschaftlich ist.

Die Lösung der geschilderten Aufgabe erfolgt nach der Erfindung durch ein Netzteil nach Anspruch 1. Es arbeitet mit jeweils einer Einrichtung für dezentrale Spannungsversorgung, die in einer Spannungsversorgungseinheit angeordnet ist und die für aktive Strombegrenzung eingerichtet ist. Hierbei ist für mehrere Spannungsversorgungseinheiten ein gemeinsames Ü-bertragungsmodul vorgesehen, das für Generierung von Ausgleichsimpulsen eingerichtet ist und das mit dem Energiespeicher versehen ist. Eine Gruppe von mehreren Spannungsversorgungseinheiten für eine größere Gruppe von Busgeräten arbeitet also mit einem Übertragungsmodul zusammen. Durch die geschilderte Anordnung und Ausbildung erübrigt sich eine besondere Entkopplung. Dies wird weiter gefördert durch eine Spannungsversorgungseinheit, die für eine Strombegrenzung durch Begrenzung der Stromsteilheit ausgelegt ist. Damit erübrigt sich eine Induktivität zur Spannungsbegrenzung und eine geeignete Bemessung dieser.

Verständlicherweise können in einem entsprechend großen System auch mehrere Untersysteme mit jeweils einem Übertragungsmodul angeordnet sein. Hierbei kann das Übertragungsmodul auch mit einer Spannungsversorgungseinheit zusammengebaut sein.

Es ist vorteilhaft, die Spannungsversorgungseinheit auch für eine Begrenzung der Stromentnahme auszulegen, so dass die maximale Stromentnahme begrenzt ist. Hierdurch wird das Zusammenschalten mehrerer Spannungsbegrenzungseinheiten gefördert.

Das Übertragungsmodul kann vorteilhaft gemäß den Anforderungen an die Übertragungstechnik ausgelegt sein.

Nach einer Weiterbildung ist die Spannungsversorgungseinheit auf eine Spannung Uo eingestellt, die der gewünschten Busspannung, vermindert um die Spannung des Ausgleichsimpulses, in etwa entspricht.

Es ist günstig, wenn die Spannungsversorgungseinheit zusätzlich mit einer Eingangsimpedanz versehen ist, die auf die Optimierung der Übertragungstechnik eingestellt ist.

Ein Übertragungsmodul kann einfach so aufgebaut werden, dass parallel zum Bus, zu den Busleitern, ein erster Zweig mit Induktivität, ohmschem Widerstand und Kapazität, ausgelegt als Pufferungskapazität, angeordnet ist. Überbrückend zur Induktivität und zum Widerstand ist ein Widerstandszweig als zweiter Zweig angeordnet, von dem ein Widerstand durch eine Diode in Durchlassrichtung überbrückt ist. Alternativ kann der Widerstandszweig mit einer weiteren Kapazität parallel zum ersten Zweig angeordnet sein.

Die Erfindung soll nun anhand von in der Zeichnung grob schematisch wiedergegebenen Ausführungsbeispielen näher erläutert werden:

In FIG 1 ist ein Bus mit einer Anordnung von Busgeräten, bzw. von Busankopplern, von Spannungsversorgungseinheiten und einem Übertragungsmodul veranschaulicht.

In FIG 2 ist eine Spannungsversorgungseinheit, im wesentlichen nach Art eines Blockschaltbilds, veranschaulicht.

In FIG 3 ist ein erstes Ausführungsbeispiel für ein Übertragungsmodul wiedergegeben.

In FIG 4 ist ein weiteres Ausführungsbeispiel für ein Übertragungsmodul dargestellt.

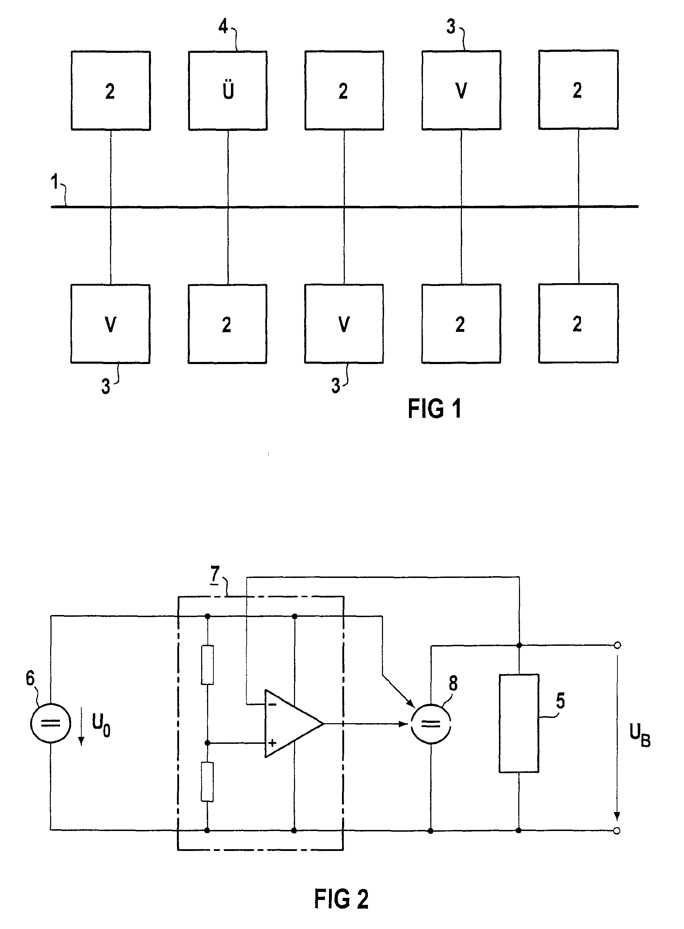

Am Bus 1 nach FIG 1 sind Busgeräte 2, bzw. Busankoppler, angeschlossen und eine Gruppe von dezentralen Spannungsversorgungseinheiten 3, denen ein Übertragungsmodul 4 zugeordnet ist. Die Spannungsversorgungseinheiten 3 sind jeweils für aktive Strombegrenzung eingerichtet. Das Übertragungsmodul 4 ist für die Generierung von Ausgleichsimpulsen eingerichtet und mit einem Energiespeicher versehen. Vorteilhaft ist das Übertragungsmodul 4 so dimensioniert, dass es auch mit ggf. zentral vorgesehenen Standard-Spannungsversorgern zusammen betrieben werden kann.

Vorteilhaft ist die Spannungsversorgungseinheit 3 jeweils durch Begrenzung der Stromsteilheit auf Strombegrenzung eingerichtet. Jede der Spannungsversorgungseinheiten 3 kann vorteilhaft auch für eine Begrenzung der maximalen Stromentnahme ausgelegt sein.

Das Übertragungsmodul 4 kann vorteilhaft gemäß den Anforderungen an die Übertragungstechnik ausgelegt sein.

Die Spannungsversorgungseinheiten 3 können vorteilhaft jeweils auf eine Spannung Uo eingestellt sein, die der gewünschten Busspannung U_{B}, vermindert um die Spannung des Ausgleichsimpulses, in etwa entspricht.

Nach einer Weiterbildung kann die Spannungsversorgungseinheit 3 jeweils zusätzlich mit einer Eingangsimpedanz 5 nach FIG 2 versehen sein, die auf die Optimierung der Übertragungstechnik eingestellt ist.

Die dezentrale Spannungsversorgungseinheit nach FIG 2 weist einen Gleichspannungsgenerator 6 auf, dem eine Regelschaltung 7 zum Regeln einer Busspannung U_{B} nachgeschaltet ist. Es wird eine Stromquelle 8 gebildet, die eine Strombegrenzung in Form der Begrenzung der Stromsteilheit unterhalb eines gewünschten vorgegebenen Wertes bewirkt. Im Ausführungsbeispiel ist eine Eingangsimpedanz 5 nachgeschaltet.

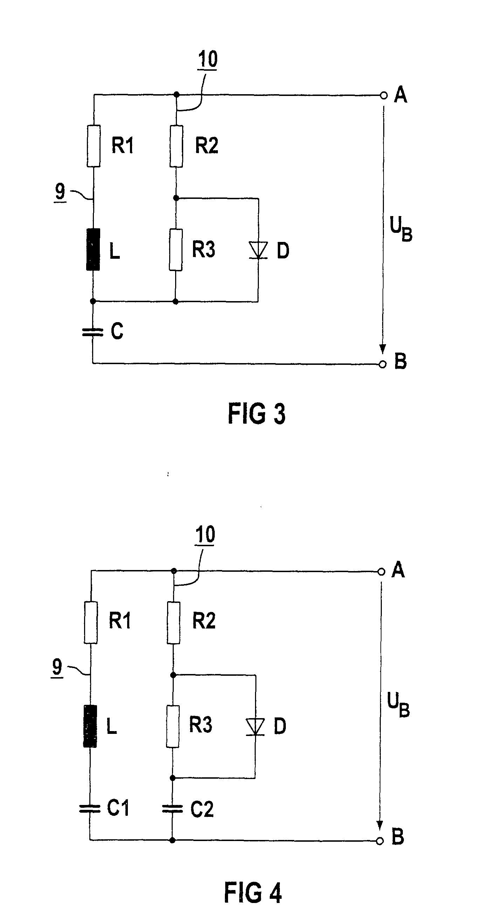

Das Übertragungsmodul kann einfach in einer Ausführung nach FIG 3 aufgebaut sein. Parallel zu den an Potentialpunkten A und B angeschlossen vorzustellenden Busleitern ist ein erster Zweig 9 mit Induktivität L, ohmschem Widerstand R1 und Kapazität C angeordnet. Die Kapazität C ist als Pufferungskapazität ausgebildet. Überbrückend zur Induktivität L und zum Widerstand R1 ist ein Widerstandszweig aus R2 und R3 als zweiter Zweig 10 angeordnet, dessen Widerstand R3 durch eine Diode D in Durchlassrichtung überbrückt ist.

In der Ausführung nach FIG 4 weist das Übertragungsmodul einen Widerstandszweig als zweiten Zweig 10 derart abgeändert auf, dass er mit einer weiteren Kapazität C2 versehen ist und parallel zum ersten Zweig 9 angeordnet ist. Der erste Zweig 9 ist dann mit einer Kapazität C1 versehen.

## Patentansprüche

1. Netzteil mit Einrichtung für dezentrale Spannungsversorgung für einen Bus (1), der Information und Energie für Bordnetze von Busankopplern und Busgeräten (2) führt, wobei jeweils zwischen zwei Sendeimpulsen ein Ausgleichsimpuls im Sinne der Erzielung eines in der Summe möglichst konstanten Gleichspannungspotentials generiert wird und wobei an Schnittstellen von Busankopplern Busgeräte für Anwenderfunktionen anschließbar sind und wobei das Netzteil für aktive Strombegrenzung und für Entkopplung, um parallele Anordnung mehrerer Netzteile zu ermöglichen, eingerichtet ist und wobei ein Energiespeicher (C,C1) zur Speicherung von Energie zwischen zwei Sendeimpulsen ausgebildet ist, **dadurch gekennzeichnet,** dass die Einrichtung für dezentrale Spannungsversorgung in einer Spannungsversorgungseinheit (3) angeordnet ist, die für aktive Strombegrenzung eingerichtet ist und dass ein für mehrere Spannungsversorgungseinheiten (3) gemeinsames Übertragungsmodul (4) für die Generierung von Ausgleichsimpulsen eingerichtet ist und dass es mit dem Energiespeicher versehen ist.

2. Netzteil nach Anspruch 1, **dadurch gekennzeichnet,** dass die Spannungsversorgungseinheit (3) für eine Strombegrenzung durch Begrenzung der Stromsteilheit ausgelegt ist.

3. Netzteil nach Anspruch 2, **dadurch gekennzeichnet,** dass die Spannungsversorgungseinheit(3) auch für eine Begrenzung der Stromentnahme ausgelegt ist.

4. Netzteil nach Anspruch 1 oder nach Anspruch 1 und einem der vorhergehenden Ansprüche, **dadurch gekennzeichnet**, dass das Übertragungsmodul (4) gemäß den Anforderungen an die Übertragungstechnik ausgelegt ist.

5. Netzteil nach einem der vorhergehenden Ansprüche, **dadurch gekennzeichnet,** dass die Spannungsversorgungseinheit (3) auf eine Spannung (Uo) eingestellt ist, die der gewünschten Busspannung (U_{B}), vermindert um die Spannung des Ausgleichsimpulses, in etwa entspricht.

6. Netzteil nach einem der vorhergehenden Ansprüche, **dadurch gekennzeichnet,** dass die Spannungsversorgungseinheit zusätzlich mit einer Eingangsimpedanz (5) versehen ist, die auf die Optimierung der Übertragungstechnik eingestellt ist.

7. Netzteil nach einem der vorhergehenden Ansprüche, **dadurch gekennzeichnet**, dass das Übertragungsmodul (4) parallel zum Bus einen ersten Zweig (9) mit Induktivität (L), ohmschem Widerstand (R1) und Kapazität (C,C1), ausgelegt als Pufferungskapazität, aufweist, wobei überbrückend zur Induktivität (L) und zum Widerstand (R1) ein Widerstandszweig als zweiter Zweig (10) angeordnet ist, dessen Widerstand (R3) durch eine Diode (D) in Durchlassrichtung überbrückt ist oder wobei der Widerstandszweig mit einer zweiten Kapazität (C2) parallel zum ersten Zweig (9) angeordnet ist.
